# EUROPEAN PATENT SPECIFICATION

(11) **EP 3 013 773 B1**
(45) Date of publication and mention of the grant of the patent: **06.03.2019**
(21) Application number: 13745471.6
(22) Date of filing: 28.06.2013
(51) Int. Cl.: C05D 1/02, C05D 5/00, C05G 3/00

(54) **PROCESS FOR MANUFACTURING GRANULAR MATERIALS CONTAINING POTASSIUM CHLORIDE, MAGNESIUM SULPHATE HYDRATE AND MGO**
VERFAHREN ZUR HERSTELLUNG VON GRANULAT MIT KALIUMCHLORID, MAGNESIUMSULFATHYDRAT UND MAGNESIUMOXID
PROCÉDÉ DE FABRICATION DE MATIÈRES GRANULAIRES CONTENANT DU CHLORURE DE POTASSIUM, DU SULFATE DE MAGNÉSIUM HYDRATÉ ET DU MGO

(43) Date of publication of application: 04.05.2016
(73) Proprietor: K+S Aktiengesellschaft, 34131 Kassel (DE)
(72) Inventor: BAUCKE, Guido, 36277 Schenklengsfeld OT Wippershain (DE); DRESSEL, Stefan, 34128 Kassel (DE); KLEINE-KLEFFMANN, Ulrich, 36251 Bad Hersfeld (DE); ANDRES, Ernst, 34128 Kassel (DE)
(74) Representative: Reitstötter Kinzebach
(86) International application number: PCT/IB2013/001388
(87) International publication number: WO 2014/207496

(56) References cited:
- EP-A2- 0 174 595
- EP-A2- 1 048 634
- US-A- 5 264 017
- DATABASE WPI Week 198930 Thomson Scientific, London, GB; AN 1989-218140 XP002720689, & JP H01 157489 A (ASAHI KAGAKU KOGYO KK) 20 June 1989 (1989-06-20)

## Description

The invention in hand concerns processes for the formation of granulates containing potassium chloride and at least one magnesium sulphate hydrate, and whose potassium contents, calculated as K₂O, range from 35 to 50 % by weight and whose water-soluble magnesium contents, calculated as MgO(water-soluble), range from 2 to 10 % by weight, both relating to the granulated material as described in claim 1.

Mixtures of potassium chloride and magnesium sulphate hydrates are widely used in farming as a combined potassium and magnesium fertilizer, especially as both salts are completely water-soluble and hence quickly available to the plants after the fertilizer is spread, and can be directly absorbed by them. Mixtures which have proven their particular effectiveness contain potassium chloride, kieserite and, as the case may be, sodium chloride, and feature potassium contents ranging between 35 and 50 % by weight, for example around 40 % by weight, and water-soluble magnesium contents of 2 to 10 % by weight, e.g. around 6 % by weight, as well as sodium contents of up to 10 % by weight, calculated as K₂O, MgO(water-soluble) and Na₂O, respectively.

Mineral fertilizers are often used in a granulated state as this form lends them favourable attributes for handling. Granular materials for example show a much less pronounced tendency to form dusts than corresponding mineral fertilizers provided in the form of fine particles, are more stable in storage, and are more easily and evenly spread by strewing.

The granulates are typically produced by the granulation of mixtures of those salts which are required for the granulates. Known processes for the granulation of salt mixtures are pressure agglomeration, build-up agglomeration and similar processes where solid particles are agglomerated into particles of increasing size. Granulations are frequently performed in the presence of binders. The latter can be liquid or solid substances whose adhesive strength makes the particles cohere. The use of such binders is called for if the granulation of the particles does not lead to an adequately stable granular material. Well-known binders for example include gelatine, starch, lignosulphonate, lime and molasses. Which binder is selected can have a decisive effect on the attributes of the agglomerates and in particular on their mechanical stability (abrasion, hardness), hygroscopic stability, and their tendency to form dust. On the one hand, the use of organic binders for granulation offers advantages where the stability of the granulated material is concerned. But on the other, binders can also have a negative effect on other properties, apart from representing a not inconsiderable cost factor.

Granulations of mixtures of potassium chloride and magnesium sulphate-containing salts are known at the current state of the art. DE 1 183 058 for example discloses the build-up agglomeration of potassium chloride with kieserite that has previously been almost completely thermally dehydrated, performed in the presence of water. DE 2 316 701 describes the granulation of potassium chloride, potassium sulphate and moist, hot langbeinite (K₂SO₄ · 2 MgSO₄), also by way of build-up agglomeration. Both examples yield granulates that fail to meet today's quality requirements, however, and in particular lack adequate stability. US5264017A discloses fertiliser granulates comprising calcined magnesite.

Granulations of kieserite, possibly infused with comparatively small amounts of potassium chloride, in the presence of carboxylic acid-based chelating agents such as citrates, for example, are furthermore known from EP 1 219 581. The use of salt mixtures whose composition would even approximately resemble the salt composition used in the invention is not disclosed anywhere, however.

The invention is hence based on the technical problem of providing a process for granulating salt mixtures of potassium chloride and magnesium sulphate hydrates, in particular kieserite or synthetically produced magnesium sulphate hydrate, with the potassium and magnesium contents stated above. The main components of the synthetic magnesium sulphate hydrate (SMS) are magnesium sulphate monohydrate and/or magnesium sulphate 5/4-hydrate, and possibly further hydrates or mixtures thereof. The granulated materials produced by way of this process, which also contain magnesium oxide, and which may as well contain sodium chloride and/or sodium sulphate and/or magnesite, are meant to feature an improved mechanical stability and in particular be distinguished by a high breaking strength and low abrasion. In addition, the availability of the granulated material's magnesium content to plants is meant to be better than with granulated materials produced by means of processes at the current state of the art, where a large part of the magnesium contents, in particular in the case of synthetically produced magnesium sulphate mono- and/or 5/4-hydrate, is more slowly soluble in water.

It was surprisingly found that water-insoluble magnesium oxide, especially one produced by calcination of magnesium carbonate (e. g. magnesite) resulting in magnesium oxide (calcined e. g. magnesite), leads to granulates on the basis of magnesium sulphate hydrate and potassium chloride, which granulates show good mechanical properties. Thus the technical problem is solved by granulates that largely consist of potassium chloride, magnesium sulphate hydrate and water insoluble magnesium oxide and, if applicable, sodium chloride and/or sodium sulphate and/or magnesite, and feature a potassium content of 35 to 50 % by weight and a content of water-soluble magnesium of 2 to 10 % by weight, calculated as K₂O and MgO(water-soluble), respectively. The resulting granules possess the required good stability characteristics, and in particular a good mechanical stability, breaking strength and/or low abrasion.

The object of the invention thus are granulates which consist mainly in potassium chloride and at least one hydrate of magnesium sulphate and water-insoluble magnesium oxide, and, if applicable, one or more salts chosen from sodium chloride, sodium sulphate and magnesium carbonate, in which the potassium content, calculated as K₂O ranges from 35 to 50 % by weight and the content of water-soluble magnesium, calculated as MgO(water-soluble), ranges from 2 to 10 % by weight, in each case referring to the salt mixtures.

The object of the invention is a process for producing granules from a salt mixture, as described in claim 6, that consists of at least 95% by weight, based on the salt mixture, of potassium chloride, magnesium sulphate hydrate and water-insoluble magnesium oxide, preferably in the form of calcined magnesite, and, if applicable, one or more salts chosen from sodium chloride, sodium sulphate and magnesium carbonate, and whose potassium contents, calculated as K₂O, range from 35 to 50 % by weight, and whose contents of water-soluble magnesium, calculated as MgO(water-soluble), range from 2 to 10 % by weight, in each case relating to the total weight of the granulated material. The process according to the invention encompasses the granulation of the salt mixture. Binding additives, especially organic binders like tylose or alkali metal salts of citric acid are not necessary to achieve the desired mechanical properties. At the same time magnesium oxide especially in the form of calcined magnesite can indeed be regarded as a binder.

Accordingly the invention also applies to the use of water-insoluble magnesium oxide according to claim 13, for the granulation of a salt mixture containing potassium chloride and at least one magnesium sulphate hydrate and magnesiumoxide, and, if applicable, one or more salts chosen from sodium chloride or sodium sulphate or magnesium carbonate in which the potassium content, calculated as K₂O ranges from 35 to 50 % by weight and the content of water-soluble magnesium, calculated as MgO (water-soluble), ranges from 2 to 10 % by weight, in each case referring to the salt mixture.

In this context, "largely consists of" means that the total quantity of magnesium sulphate hydrate, potassium chloride, magnesium oxide and the possibly provided sodium salt or magnesium carbonate makes up at least 95 % by weight of the total salt mixture, and in particular at least 99 % by weight of that salt mixture or granulate.

The water-soluble magnesium content of the granulate or the salt mixture mainly originates in the magnesium sulphate hydrate while magnesite and magnesium oxide, preferably as calcined magnesite, are mainly or completely water-insoluble.

The suitable hydrates of magnesium sulphate for the granulates or the process according to the invention in particular include magnesium sulphate monohydrate and magnesium sulphate 5/4-hydrate, or possibly magnesium sulphate dihydrate, as well as mixtures of these hydrates. The preferable hydrates of magnesium sulphate for the invented process in particular include natural magnesium sulphate monohydrate (kieserite) as well as synthetically produced magnesium sulphate monohydrate (SMS). Preferable hydrates of magnesium sulphate are also mixtures where magnesium sulphate (synthetic or natural) makes up the main component and that can possibly also contain other hydrates such as magnesium sulphate 5/4-hydrate or magnesium sulphate dihydrate. Particularly preferable is the application of a magnesium sulphate hydrate that contains a minimum of 80 % by weight of magnesium sulphate monohydrate and 5/4-hydrate, relating to the total amount of magnesium sulphate hydrate. A suitable synthetic magnesium sulphate hydrate and in particular synthetic magnesium sulphate monohydrate can for example be produced from calcined magnesite (MgO) and concentrated sulphuric acid. This synthetic magnesium sulphate monohydrate can be used in the process that is the subject of this invention after storage, or also immediately upon its production. The synthetically produced magnesium sulphate monohydrate product used for this can typically contain between 18 and 28 % of MgO (water-soluble) and between 56 and 32 % of magnesium oxide (total), with the latter figure including both the magnesium oxide (water-soluble) and the practically water-insoluble magnesium oxide, the latter resulting from the not converted magnesium oxide (e. g. calcined magnesite) or magnesium carbonate as reactant for the synthetically produced magnesium sulphate monohydrate.

The granulates according to the invention exhibit a potassium content, calculated as K₂O, which ranges from 35 to 50 % by weight, especially from 37 to 47 % by weight and particularly from 41 to 45 % by weight referring to the salt mixture. The granulates according to the invention exhibit a water-soluble magnesium content, calculated as MgO(water-soluble), which ranges from 2.0 to 10.0 % by weight and particularly from 5.0 to 7.0 % by weight referring to the granulate. Preferably the granulates according to the invention exhibit a magnesium oxide content, calculated as MgO(water-insoluble) which ranges from 0.01 to 15 % by weight, especially from 0.1 to 11 % by weight and particularly from 0.4 to 8 % by weight in each case referring to the granulate. The total content of magnesium, calculated as MgO(total) typically ranges from 2.01 to 25 % by weight, especially from 5.1 to 20 % by weight and particularly from 5.4 to 18 % by weight.

In a preferred embodiment the granulate contain at least one sodium salt chosen from sodium chloride and sodium sulphate. The sodium content of the granulate, calculated as Na₂O, generally ranges from 0.01 to 15 % by weight, especially from 0.1 to 11 % by weight and particularly from 0.4 to 8 % by weight in each case referring to the granulate. The total content of sodium salts, calculated as Na₂O, and of magnesium oxide, calculated as MgO(water-insoluble), generally ranges from 0.02 to 15 % by weight, especially from 0.2 to 11 % by weight and particularly from 0.8 to 8 % by weight in each case referring to the granulate.

The granulation by way of the process according to the invention can be performed analogously to the agglomeration processes known from the state of the art such as for example the ones described in Wolfgang Pietsch, Agglomeration Processes, Wiley-VCH, 1st edition, 2002, as well as in G. Heinze, Handbuch der Agglomerationstechnik (Handbook of Agglomeration Technology), Wiley-VCH, 2000.

The granulation is preferably performed in accordance with the process of the invention as build-up agglomeration or press granulation.

In a particularly preferred embodiment of the invention the granulation according to the invention is carried out as a build-up agglomeration.

In the granulation by means of build-up agglomeration, the particles of the salt mixture containing the potassium chloride and hydrate of magnesium sulphate, in particular kieserite or synthetically produced magnesium sulphate monohydrate, and magnesium oxide, particularly in the form of calcined magnesite, are set in motion, with water being added during the mixing process.

This build-up agglomeration can for example be performed in the form of a rolling, mixing or fluid bed agglomeration, with rolling agglomeration preferred for the purposes of the invention in hand. Rolling agglomeration involves placing the particulate salt mixture in a container that has an inclined axis of rotation and circular cross-section, preferably a dish granulator or drum granulator. The particles of the salt mixture are then set in motion by rotating this container.

In a preferred embodiment of the invention, the salt mixture, which largely consists of potassium chloride, kieserite, magnesium oxide (in particular calcined magnesite), and possibly sodium chloride and/or sodium sulphate and/or magnesium carbonate, has a potassium content, calculated as K₂O, that ranges between 35 and 50 % by weight, and preferably between 37 and 47 % by weight, and in particular between 41 and 45 % by weight, as well as a content of water-soluble magnesium, calculated as MgO(water-soluble), that ranges between 2 and 10 % by weight, and in particular between 5 and 7 % by weight, in each case referring to the salt mixture. The content of magnesium oxide, calculated as MgO(water-insoluble), generally ranges from 0.01 to 15 % by weight, especially from 0.1 to 11 % by weight and particularly from 0.4 to 8 % by weight, in each case referring to the salt mixture.

In another preferred embodiment of the invention the salt mixture, besides potassium chloride, the magnesium sulphate hydrate, in particular kieserite or synthetically produced magnesium sulphate mono- and/or 5/4-hydrate as well as magnesium oxide, particularly in the form of calcined magnesite, additionally contains sodium chloride or sodium sulphate or magnesite or a mixture thereof. The total sodium content, calculated as Na₂O usually ranges from 0.01 to 15 % by weight, preferably between 0.1 and 11 % by weight, and in particular between 0.4 and 8 % by weight, in each case relating to the salt mixture. The total sodium content, calculated as Na₂O and water-insoluble magnesium oxide, calculated as MgO(water-insoluble) usually ranges from 0.02 to 15 % by weight, preferably between 0.2 and 11 % by weight, and in particular between 0.8 and 8 % by weight, in each case relating to the salt mixture.

The sum of the water-soluble and practically water-insoluble magnesium contents represents the magnesium (total). The magnesium oxide used for the preparation of the granulates may be natural or synthetic magnesium oxide for example calcined magnesium hydroxide or calcined magnesium carbonate (calcined e. g. magnesite) or a magnesium oxide resulting from the air oxidation of magnesium. Calcined magnesite is preferred.

The salt mixture used for granulation can furthermore contain other fertilizer components such as, for example, urea, potassium nitrate, or micronutrients. The proportion of these further components will as a rule not exceed 10 % by weight in relation to the salt mixture's total weight. Examples for micronutrients most of all include salts containing boron and manganese. The proportion of these micronutrients will as a rule not exceed 5 % by weight, and in particular 1 % by weight in relation to the salt mixture's total weight.

In a preferred embodiment of the invention, the salt mixture used for the granulation process is applied in a particulate and/or powdered form. This is meant to imply here that at least 90 % by weight of the salt mixture consists of particles whose diameter is smaller than 1.5 mm, and in particular smaller than 1 mm. A minimum of 90 % by weight of the salt mixture will feature particle sizes ranging from 0.01 to 1.5 mm, and especially from 0.02 to 1.0 mm. The d₅₀ value of the salt particles used for granulation (i.e. the weight average of the particle size) as a rule ranges from 0.05 to 0.7 mm, and in particular from 0.1 to 0.5 mm. The particle sizes stated here and below can be determined by way of screen analysis.

A minimum of 90 % by weight of the particulate magnesium sulphate hydrate contained in above powdered salt mixture will as a rule feature particle sizes below 1.5 mm and in particular below 1 mm. The size of the particles of at least 90 % by weight of the magnesium sulphate hydrate will preferably range between 0.01 and 1.5 mm, and in particular between 0.02 and 1.0 mm.

A minimum of 90 % by weight of the particulate potassium chloride contained in above powdered salt mixture will as a rule feature particle sizes below 1.5 mm, and in particular below 1.0 mm. The size of the particles of at least 90 % by weight of the potassium chloride will preferably range between 0.01 and 1.5 mm, and in particular between 0.01 and 1.0 mm. The potassium component can be applied in the form of potassium chloride (MOP), i.e. with 60 % by weight of K₂O, or also in other qualities (for example 40 to 60 % K₂O).

The potassium component can be applied in the form of potassium chloride, for example potassium chloride (MOP), which also contains sodium chloride, or also in the form of mixed salts including potassium and magnesium salts, for example.

If the salt mixture contains sodium chloride or magnesite), the sodium chloride and magnesium carbonate particles will also preferably exhibit particle sizes within the ranges stated for potassium chloride. The same particle sizes apply for magnesium oxide.

Potassium chloride with magnesium sulphate hydrate as a fast-acting fertilizer can be used in combination with magnesium oxide (e. g. calcined magnesite), where the practically water insoluble magnesium oxide from the calcined magnesite will additionally become available to the plants very slowly under the acidic conditions in the soil.

The granules manufactured by way of the invented process are distinguished by a high mechanical stability, low dust behaviour and good hygroscopic stability. In addition, a very high proportion of the magnesium contents (Mg water-soluble) of the granulated materials becomes available to the plants immediately.

The invention furthermore concerns the application of magnesium oxide (e. g. calcined magnesite) or a mixture of sodium chloride and/or magnesite and magnesium oxide (e. g. calcined magnesite) for producing granulates of a salt mixture that largely consists of potassium chloride, at least one hydrate of magnesium sulphate, and magnesium oxide, in particular calcined magnesite, and features potassium contents that range between 35 and 50 % by weight, calculated as K₂O, and magnesium contents that range between 2 and 10 % by weight, calculated as MgO, in each case relating to the granulate.

The information provided above in connection with the process that is the subject of this invention with regard to preferred embodiments also applies to the utilization in accordance with the invention.

The process that is the subject of this invention and the utilization that is the subject of this invention are both explained in greater detail below.

### Rolling agglomeration of potassium chloride and magnesium sulphate hydrate: Experimental details for examples 10 and 11 as well as the comparative examples V1 to V9:

The magnesium sulphate hydrate used was a magnesium sulphate hydrate (SMS) that had been synthetically produced from magnesium carbonate and concentrated sulphuric acid and featured the following properties:
Magnesium content (total): 17.7 % by weight (Mg)
Magnesium content (water-soluble): 15.6 % by weight (Mg)
Magnesium content, practically water-insoluble Mg content: 2.0 %

This means that the magnesium content (total) includes the water-soluble portion and the practically water-insoluble portion (Regulation (EC) no. 2003/2003 of the European Parliament and of the Council of 13 October 2003 relating to fertilisers, methods 8.1 and 8.3)
Sulphate: 64 % by weight
Ignition loss (at 550°C): 13.7 % by weight
Drying loss (at 105°C): 1.3 % by weight
pH value of a 5 % by weight aqueous solution: pH 8.8

The calculated water content amounts to 1.18 mol per mol of magnesium.

According to X-ray powder diffractometry, the main component is a "synthetic magnesium sulphate hydrate (SMS)" (magnesium sulphate monohydrate and/or magnesium sulphate 5/4-hydrate). Further ingredients are anhydrite, hexahydrite and small quantities of magnesite, talc and quartz.

Screening showed the following particle size distribution

| Grain class | % by mass |
|---|---|
| > 2.0 mm | 4.7 |
| > 1.4 mm | 6.5 |
| > 1.0 mm | 6.4 |
| > 0.8 mm | 5.0 |
| > 0.5 mm | 16.5 |
| > 0.3 mm | 22.4 |
| > 0.16 mm | 27.0 |
| < 0.16 mm | 11.5 |

This synthetic magnesium sulphate hydrate was fractionated by screening into three fractions with different particle sizes:
SMS A (particle size smaller than 0.5 mm)
SMS B (particle size from 0.5 to 1.4 mm)
SMS C (particle size from 0.3 to 1.0 mm).

The rolling granulation was performed using a mixture of potassium chloride (MOP), SMS A (particle size smaller than 0.5 mm) (magnesium sulphate hydrate synthetically produced from magnesium carbonate and concentrated sulphuric acid), calcined magnesite and water, as well as sodium chloride (NaCl) (ex. 10), plus once without the sodium chloride (ex. 11). Powdered potassium chloride (KCI (MOP)) was in each case homogenously mixed with the synthetic magnesium sulphate hydrate, calcined magnesite and, where applicable, the sodium chloride,. The water was added during the granulation process by spraying. The respectively applied mixing ratios [in gram (g) and in%] of potassium chloride, SMS A, calcined magnesite, sodium chloride and water are listed in Tables 1 and 2.

The mixing ratios of components used in examples 10 and 11 are listed in Table 2. The rolling granulation was performed by placing the respectively resulting salt mixture in a granulation dish (diameter: 500 mm, side height: 85 mm, inclination angle: 39°) first and then rotating it at a speed of 35 rpm, while continuously adding the water to the salt mixture by spraying. The quantities of water and binder used for producing the binder solutions and/or suspensions in the individual examples can also be found in Table 1. The following binders were used in the comparative tests: trisodium citrate hydrate (TSC) in the comparative examples 1 and 2, modified wheat starch (MWS) in comparative tests 6 and 7, and tylose (water-soluble cellulose ether) (TYL) in examples 8 and 9. The only binder used in the comparative examples 3 to 5 was water.

**Table 1: Type and quantity of components used**

| Example (ex.) | Potassium chloride | SMS A | SMS B | SMS C | Calc. magnesite | NaCl | Binder solution and/or suspension | |
|---|---|---|---|---|---|---|---|---|
| | | | | | | | Water | Binder |
| V1 | 555 g | 192 g | | | | | 150 g | TSC: 7 g |
| V2 | 555 g | | | 192 g | | | 138 g | TSC:7 g |
| V3 | 555 g | 192 g | | | | | 185 g | - |
| V4 | 555 g | | 192 g | | | | 162 g | - |
| V5 | 555 g | | | 192 g | | | 160 g | - |
| V6 | 555 g | 192 g | | | | | 190 g | MWS: 7 g |
| V7 | 555 g | | | 192 g | | | 180 g | MWS: 7 g |
| V8 | 555 g | 192 g | | | | | 170 g | TYL: 7 g |
| V9 | 555 g | | | 192 g | | | 170 g | TYL: 7 g |
| 10 | 533 g | 184 g | | | 41 g | 41 g | 89 | - |
| 11 | 533 g | 184 g | | | 82 g | - | 114 | - |

**Table 2: Mixing ratios of components used**

| Components | Ex.10 mixing ratio [%] | Ex. 11 mixing ratio [%] |
|---|---|---|
| KCl (MOP) | 66.7 | 66.7 |
| SMS A | 23.1 | 23.1 |
| calc. magnesite | 5.1 | 10.3 |
| NaCl | 5.1 | - |
| Water | 11.1 | 14.3 |

The compositions of the granulated materials produced in the examples were evaluated by way of an ultimate analysis performed with a wavelength-dispersive x-ray fluorescence spectrometer. The results are listed in Table 3.

**Table 3: Composition of the granulated materials produced**

| Proportions [% by weight] | Example: | | | | | | | | |
|---|---|---|---|---|---|---|---|---|---|
| | V1 | V2 | V5 | V6 | V7 | V8 | V9 | 10 | 11 |
| Potassium | 35.7 | 36.6 | 38.8 | 36.3 | 37.0 | 36.6 | 39.9 | | |
| Magnesium | 4.12 | 4.22 | 3.64 | 4.31 | 4.02 | 4.22 | 3.30 | | |
| Mg, water-soluble | 3.66 | 3.74 | 3.38 | 3.85 | 3.75 | 3.74 | 3.10 | | |
| Sodium | 0.78 | 0.61 | 0.53 | 0.50 | 0.55 | 0.61 | 0.61 | 2.47 | 0.54 |
| Calcium | 0.19 | 0.19 | 0.16 | 0.19 | 0.18 | 0.19 | 0.14 | 0.24 | 0.26 |
| Sulphate | 14.3 | 14.8 | 12.9 | 14.9 | 14.4 | 14..8 | 11.6 | | |
| Drying loss | 3.0 | 1.0 | 1.1 | 1.4 | 1.4 | 1.0 | 1.4 | | |
| Ignition loss | 8.9 | 7.0 | 5.6 | 7.0 | 7.0 | 7.0 | 6.3 | | |
| K₂O (as per analysis) | 43.0 | 44.1 | 46.7 | 43.7 | 44.6 | 44.1 | 48.1 | | |
| MgO water-soluble (as per analysis) | 6.1 | 6.2 | 5.6 | 6.4 | 6.2 | 6.2 | 5.1 | | |
| K₂O (theoretical) | 44.5 | 44.5 | 44.9 | 44.5 | 44.5 | 44.5 | 44.5 | | |
| MgO, water-soluble (theoretical) | 6.6 | 6.6 | 6.7 | 6.6 | 6.6 | 6.6 | 6.6 | | |

The K₂O and MgO contents were determined by means of inductively coupled plasma atomic emission spectroscopy (ICP-AES).

The loss on drying (at 105°C) was determined by measuring the dry residue and water content in keeping with DIN EN 12880.

To determine the ignition loss, the substance was covered with lead oxide and calcined at 550-600°C in a muffle kiln, before gravimetrically determining the weight loss.

The particle sizes, breaking strength and abrasion of the granular materials produced in the examples were established as follows:
The particle sizes of the granulates were measured by screening, whereby the granular particles were separated into three fractions measuring more than 5 mm, 2 to 5 mm, and less than 2 mm, and then defining the respective portions in percent by weight. The median breaking strength was established with the help of the TBH 425D type tablet breaking strength tester by ERWEKA and on the basis of measurements concerning 56 individual agglomerates with various grain sizes.

The abrasion values were determined by way of the rolling drum method after Busch.

The values for abrasion and crushing strength were measured using shots of the 2.5 to 3.15 mm fraction.

The residual moisture was measured using a type HR 73 halogen dryer by Mettler.

The measured values are listed in Table 4.

**Table 4: Properties of the granulated materials produced**

| Ex. | Grain size fractions [% by weight] | | | Abrasion [% by weight] | | Breaking strength [N] | | Residual moisture [% by weight] | |
|---|---|---|---|---|---|---|---|---|---|
| | >5mm | 2-5mm | <2mm | 1 day | 7 days | 1 day | 7 days | 1 day | 7 days |
| V1 | 10.4 | 71.4 | 18.2 | 28 | 18 | 18 | 18 | 1.4 | 2.7 |
| V2 | 11.3 | 41.1 | 47.6 | 28 | 16 | 22 | 22 | 1.2 | 1.2 |
| V3 | 7.3 | 84.2 | 8.5 | 49 | 44 | 16 | 17 | 0.3 | 1.0 |
| V4 | 1.6 | 60.9 | 37.5 | 90 | 84 | <5 | <5 | 2.8 | 2.1 |
| V5 | 3.8 | 76.8 | 19.4 | 76 | 66 | 15 | 16 | 0.8 | 0.4 |
| V6 | 9.9 | 79.1 | 11.0 | 35 | 38 | 18 | 17 | 1.1 | 0.8 |
| V7 | 6.1 | 78.1 | 15.8 | 58 | 31 | 15 | 16 | 1.2 | 1.0 |
| V8 | 3.7 | 88.1 | 8.2 | 60 | 56 | 16 | 18 | 0.4 | 0.7 |
| V9 | 3.3 | 57.4 | 39.3 | 53 | 49 | 18 | 18 | 0.4 | 1.0 |
| 10 | 8.8 | 73.7 | 17.5 | 12 | 11 | 32 | 39 | 1.9 | 1.0 |
| 11 | 13.1 | 77.0 | 9.9 | 8 | 7 | 39 | 39 | 1.0 | 1.6 |

For Ex. 10 and Ex. 11 abrasion, breaking strength and residual moisture were additionally measured after 14 days:
Ex. 10: abrasion [% by weight]: 11, breaking strength [N]:38, residual moisture [% by weight]: 2.1
Ex. 11: abrasion [% by weight]: 6, breaking strength [N]:39, residual moisture [% by weight]: 2.1

The data listed in Table 4 show that granulates produced by means of the process that is the subject of this invention exhibit considerably greater breaking strengths and also tangibly improved abrasion resistances than those in the comparative examples. They are hence considerably more robust overall.

The granulated materials yielded are distinguished by a high mechanical stability as well as little dust formation, e.g. in reloading, and furthermore by a great fastness to moisture.

The term "materials applied" here relates to the sum of the weights of potassium chloride, magnesium sulphate hydrate and magnesium oxide and, where appropriated, sodium chloride, magnesite, sodium sulphate.

## Claims

1. Granulate consisting to at least 95 % by weight, based on the granulate, of potassium chloride, at least one magnesium sulphate hydrate and water-insoluble magnesium oxide, as well as, if applicable, one or more salts chosen from sodium chloride, sodium sulphate and magnesium carbonat, in which the potassium content, calculated as K₂O, ranges from 35 to 50 % by weight and in which the water-soluble magnesium content, calculated as MgO (water-soluble), ranges from 2 to 10 % by weight, both relating to the granulated material.

2. Granulate according to claim 1 where the magnesium sulphate hydrate is chosen from magnesium sulphate monohydrate, magnesium sulphate 5/4-hydrate and magnesium sulphate dihydrate and mixtures of these hydrates.

3. Granulate according to claim 1 or 2, where the magnesium oxide is calcined magnesite.

4. Granulate according to claims 1 to 3, containing magnesium oxide in a range from 0.01 to 15 % by weight referring to the total weight of the granulate.

5. Granulate according to claims 1 to 4, containing 0.1 to 11 % by weight of sodium chloride, calculated as Na₂O, or of sodium sulphate, calculated as Na₂O or a mixture of both.

6. Process for manufacturing granulates according to one of the previous claims, comprising the granulation of a salt mixture that consists to at least 95 % by weight, based on the salt mixture, of potassium chloride, at least one magnesium sulphate hydrate and water-insoluble magnesium oxide, as well as, if applicable, one or several salts selected from sodium chloride, sodium sulphate and magnesium carbonate, and whose potassium contents, calculated as K₂O, range from 35 to 50 % by weight, while its contents of water-soluble magnesium, calculated as MgO (water-soluble), range from 2 to 10 % by weight, in each case referring to the salt mixture.

7. Process according to claim 6 where the magnesium oxide is used in a quantity of 0.01 to 15 percent by weight of the materials applied.

8. Process according to claim 6 where a powdered salt mixture is used for granulating.

9. Process according to claim 8 where a minimum of 90 % by weight of the magnesium sulphate hydrate in the powdered salt mixture exhibits particle sizes ranging from 0.01 mm to 1.5 mm.

10. Process according to claim 8 where a minimum of 90 % by weight of the potassium chloride in the powdered salt mixture exhibits particle sizes ranging from 0.01 mm to 1.5 mm.

11. Process as per claim 7 where the granulation is performed by means of build-up agglomeration.

12. Process as per claims 6 or 7, where water is added in several portions or continuously to a minimum of 90 % of the salt mixture in the granulation process.

13. The use of water-insoluble magnesium oxide for producing granulates from a salt mixture that consists to at least 95 % by weight, based on the salt mixture, of potassium chloride, at least one magnesium sulphate hydrate and magnesium oxide, as well as, if applicable, one or several salts selected from sodium chloride and sodium sulphate and magnesium carbonate, and whose potassium content, calculated as K₂O, ranges from 35 to 50 % by weight, and whose content of water-soluble magnesium, calculated as MgO (water-soluble), ranges from 2 to 10 % by weight, in each case relating to the granulated material.

## Patentansprüche

1. Granulat, bestehend zu wenigstens 95 Gew.-%, bezogen auf das Granulat, aus Kaliumchlorid, wenigstens einem Hydrat des Magnesiumsulfats und wasserunlöslichem Magnesiumoxid, sowie gegebenenfalls einem oder mehreren Salzen, ausgewählt aus Natriumchlorid, Natriumsulfat und Magnesiumcarbonat, worin der Kaliumanteil, gerechnet als K₂O, im Bereich von 35 bis 50 Gew.-% und der Anteil an wasserlöslichem Magnesium, gerechnet als MgO (wasserlöslich), im Bereich von 2 bis 10 Gew.-% liegt, jeweils bezogen auf das Granulat.

2. Granulat nach Anspruch 1, wobei das Hydrat des Magnesiumsulfats ausgewählt ist aus Magnesiumsulfat-Monohydrat, Magnesiumsulfat-5/4-Hydrat und Magnesiumsulfat-Dihydrat und Gemischen dieser Hydrate.

3. Granulat nach Anspruch 1 oder 2, wobei das Magnesiumoxid calciniertes Magnesit ist.

4. Granulat nach einem der Ansprüche 1 bis 3, enthaltend Magnesiumoxid in einer Menge von 0,01 bis 15 Gew.-%, bezogen auf das Gesamtgewicht des Granulats.

5. Granulat nach einem der Ansprüche 1 bis 4, enthaltend 0,1 bis 11 Gew.-% Natriumchlorid, gerechnet als Na₂O, oder Natriumsulfat, gerechnet als Na₂O oder ein Gemisch aus beiden.

6. Verfahren zur Herstellung von Granulaten nach einem der vorhergehenden Ansprüche, umfassend das Granulieren einer Salzmischung, die zu wenigstens 95 Gew.-%, bezogen auf die Salzmischung, aus Kaliumchlorid, wenigstens einem Hydrat des Magnesiumsulfats und wasserunlöslichem Magnesiumoxid, sowie gegebenenfalls einem oder mehreren Salzen, ausgewählt aus Natriumchlorid, Natriumsulfat und Magnesiumcarbonat besteht und worin der Kaliumanteil, gerechnet als K₂O, im Bereich von 35 bis 50 Gew.-% und der Anteil an wasserlöslichem Magnesium, gerechnet als MgO (wasserlöslich) im Bereich von 2 bis 10 Gew.-% liegt, jeweils bezogen auf die Salzmischung.

7. Verfahren nach Anspruch 6, wobei das Magnesiumoxid in einer Menge von 0,01 bis 15 Gew.-% bezogen auf die Einsatzstoffe eingesetzt wird.

8. Verfahren nach Anspruch 6, wobei man zur Granulierung eine pulverförmige Salzmischung einsetzt.

9. Verfahren nach Anspruch 8, worin wenigstens 90 Gew.-% des Hydrats des Magnesiumsulfats in der pulverförmigen Salzmischung Partikelgrößen im Bereich von 0,01 mm bis 1,5 mm aufweisen.

10. Verfahren nach Anspruch 8, wobei wenigstens 90 Gew.-% des Kaliumchlorids in der pulverförmigen Salzmischung Partikelgrößen im Bereich von 0,01 mm bis 1,5 mm aufweisen.

11. Verfahren nach Anspruch 7, wobei man die Granulierung als Aufbauagglomeration durchführt.

12. Verfahren nach Anspruch 6 oder 7, wobei Wasser in mehreren Portionen oder kontinuierlich zu wenigstens 90 Gew.-% der Salzmischung während des Granulationsverfahrens zugegeben wird.

13. Verwendung von wasserunlöslichem Magnesiumoxid zur Herstellung von Granulaten aus einer Salzmischung, die zu wenigstens 95 Gew.-%, bezogen auf die Salzmischung, aus Kaliumchlorid, wenigstens einem Hydrat des Magnesiumsulfats und Magnesiumoxid sowie gegebenenfalls einem oder mehreren Salzen, ausgewählt aus Natriumchlorid und Natriumsulfat und Magnesiumcarbonat, besteht und wobei der Kaliumanteil, gerechnet als K₂O im Bereich von 35 bis 50 % Gew.-% und der Anteil an wasserlöslichem Magnesium, gerechnet als MgO (wasserlöslich), im Bereich von 2 bis 10 Gew.-% liegt, jeweils bezogen auf das Granulat.

## Revendications

1. Matière granulaire constituée à hauteur d'au moins 95 % en poids, sur la base de la matière granulaire, de chlorure de potassium, d'au moins un sulfate de magnésium hydraté et d'oxyde de magnésium insoluble dans l'eau, ainsi que, s'il y a lieu, d'un ou plusieurs sels choisis entre le chlorure de sodium, le sulfate de sodium et le carbonate de magnésium, dans laquelle la teneur en potassium, calculée en termes de K₂O, va de 35 à 50 % en poids et dans laquelle la teneur en magnésium hydrosoluble, calculée en termes de MgO (hydrosoluble), va de 2 à 10 % en poids, toutes deux par rapport à la matière granulée.

2. Matière granulaire selon la revendication 1 dans laquelle le sulfate de magnésium hydraté est choisi entre le sulfate de magnésium monohydraté, le sulfate de magnésium 5/4-hydraté et le sulfate de magnésium dihydraté et les mélanges de ces hydrates.

3. Matière granulaire selon la revendication 1 ou 2 dans laquelle l'oxyde de magnésium est de la magnésite calcinée.

4. Matière granulaire selon les revendications 1 à 3, contenant de l'oxyde de magnésium dans une plage de 0,01 à 15 % en poids par rapport au poids total de la matière granulaire.

5. Matière granulaire selon les revendications 1 à 4, contenant 0,1 à 11 % en poids de chlorure de sodium, calculé en termes de Na₂O, ou de sulfate de sodium, calculé en termes de Na₂O, ou d'un mélange des deux.

6. Procédé pour la fabrication de matières granulaires selon l'une des revendications précédentes, comprenant la granulation d'un mélange de sels qui est constitué à hauteur d'au moins 95 % en poids, sur la base du mélange de sels, de chlorure de potassium, d'au moins un sulfate de magnésium hydraté et d'oxyde de magnésium insoluble dans l'eau, ainsi que, s'il y a lieu, d'un ou plusieurs sels choisis entre le chlorure de sodium, le sulfate de sodium et le carbonate de magnésium, et dont la teneur en potassium, calculée en termes de K₂O, va de 35 à 50 % en poids, tandis que sa teneur en magnésium hydrosoluble, calculée en termes de MgO(hydrosoluble), va de 2 à 10 % en poids, dans chaque cas par rapport au mélange de sels.

7. Procédé selon la revendication 6 dans lequel l'oxyde de magnésium est utilisé en une quantité de 0,01 à 15 pour cent en poids des matières appliquées.

8. Procédé selon la revendication 6 dans lequel un mélange de sels en poudre est utilisé pour la granulation.

9. Procédé selon la revendication 8 dans lequel un minimum de 90 % en poids du sulfate de magnésium hydraté dans le mélange de sels en poudre présente des tailles de particule allant de 0,01 mm à 1,5 mm.

10. Procédé selon la revendication 8 dans lequel un minimum de 90 % en poids du chlorure de potassium dans le mélange de sels en poudre présente des tailles de particule allant de 0,01 mm à 1,5 mm.

11. Procédé selon la revendication 7 dans lequel la granulation est effectuée au moyen d'une agglomération par accumulation.

12. Procédé selon les revendications 6 ou 7, dans lequel de l'eau est ajoutée en plusieurs fois ou en continu à un minimum de 90 % du mélange de sels dans le procédé de granulation.

13. Utilisation d'oxyde de magnésium insoluble dans l'eau pour la production de matières granulaires à partir d'un mélange de sels qui est constitué à hauteur d'au moins 95 % en poids, sur la base du mélange de sels, de chlorure de potassium, d'au moins un sulfate de magnésium hydraté et d'oxyde de magnésium, ainsi que, s'il y a lieu, d'un ou plusieurs sels choisis entre le chlorure de sodium et le sulfate de sodium et le carbonate de magnésium, et dont la teneur en potassium, calculée en termes de K₂O, va de 35 à 50 % en poids et dont la teneur en magnésium hydrosoluble, calculée en termes de MgO (hydrosoluble), va de 2 à 10 % en poids, dans chaque cas par rapport à la matière granulée.
